# EUROPEAN PATENT APPLICATION

(11) **EP 1 178 667 A2**
(43) Date of publication of application: **06.02.2002**
(21) Application number: 01118526.1
(22) Date of filing: 01.08.2001
(51) Int. Cl.: H04N 1/327, H04N 1/00

(54) **Image reading apparatus and its control method**

(30) Priority: 02.08.2000 JP 2000234553
(71) Applicant: CANON KABUSHIKI KAISHA, Tokyo (JP)
(72) Inventor: Nanpei, Kenichi, Ohta-ku, Tokyo (JP)
(74) Representative: Leson, Thomas Johannes Alois, Dipl.-Ing.

(57) **Abstract**

In an image reading apparatus which has an image sensing unit for reading an image, and a communication unit for transferring an image signal read by the image sensing unit to an external apparatus, a detector detects the presence/absence of abnormality of the communication unit, and when the detector detects any abnormality of the communication unit, the image reading apparatus is set in a power saving mode.

## Description

### FIELD OF THE INVENTION

The present invention relates to an image reading apparatus which can transfer a read image signal to an external apparatus via a communication unit, and its control method.

### BACKGROUND OF THE INVENTION

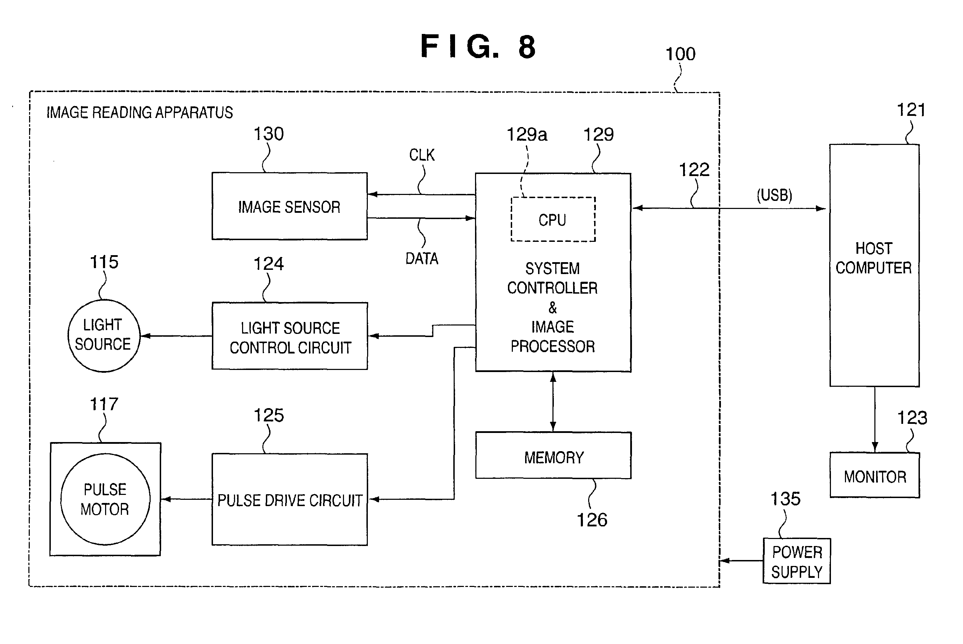

As a conventional image reading apparatus which reads a document image, converts it into an electrical analog image signal, converts the analog image signal into a digital signal, and transfers the digital signal to an external apparatus, an apparatus shown in, e.g., Fig. 8 is known.

Fig. 8 is a block diagram showing an example of the arrangement of a conventional image reading apparatus.

This image reading apparatus 100 turns on a light source 115 mounted on an optical unit upon receiving a read command from a host computer 121, and forms an image of light reflected by a document on an image sensor 130, thus reading an image for one line in the main scan direction. Meanwhile, the optical unit moves in the sub-scan direction by the drive force of a pulse motor 117. That is, the image reading apparatus 100 repeats to read a line image in the main scan direction while moving the optical unit in the sub-scan direction.

A system controller & image processor 129 executes various kinds of control in accordance with commands from the host computer 121, and executes various image processes for an image signal converted into a digital signal. The system controller & image processor 129 comprises a CPU 129a, which monitors communications to detect disconnection/connection of a USB cable 122 as a communication unit with the host computer 121.

However, the conventional image reading apparatus must inevitably comprise the CPU 129a to detect disconnection/connection of the communication unit 122 and to detect any abnormality. For this reason, an image reading apparatus with a simple structure which does not incorporate any CPU and operates in response to each control command sent from the host computer 121 via the communication unit 122 cannot detect disconnection/connection of the communication unit 122.

Also, in such image reading apparatus with a simple structure which does not incorporate any CPU, when the communication unit 122 is disconnected, since no control command from the host computer 121 can be received, the subsequent operation becomes unstable, and the unit continues to be energized, resulting in an increase in consumption power.

### SUMMARY OF THE INVENTION

The present invention has been made in consideration of the above situation, and has as its object to allow even an image reading apparatus with a simple arrangement, which does not incorporate any CPU or the like, to detect communication disconnection, and to attain power savings in the apparatus.

According to the present invention, the foregoing object is attained by providing an image reading apparatus which comprises an image sensing unit for reading an image, and a communication unit for transferring an image signal read by the image sensing unit to an external apparatus, comprising: a detector for detecting presence/absence of abnormality of the communication unit; and a controller for, when the detector detects any abnormality of the communication unit, setting the image reading apparatus in a power saving mode.

Further, according to the present invention, the foregoing object is also attained by providing a control method for an image reading apparatus which comprises an image sensing unit for reading an image, and a communication unit for transferring an image signal read by the image sensing unit to an external apparatus, comprising: a detection step of detecting presence/absence of abnormality of the communication unit; and a control step of setting, when any abnormality of the communication unit is detected in the detection step, the image reading apparatus in a power saving mode.

Furthermore, an according to the present invention, the foregoing object is also attained by providing an image processing system which comprises an image reading apparatus for outputting an image signal read by an image sensing unit to a communication unit, and a host apparatus for processing the image signal sent from the image reading apparatus via the communication unit, the image reading apparatus comprising: a detector for detecting presence/absence of abnormality of the communication unit; and a controller for, when the detector detects any abnormality of the communication unit, setting the image reading apparatus in a power saving mode.

It is another object of the present invention to allow even an image reading apparatus which uses a CPU or the like to detect communication disconnection by a simple arrangement, and to attain power savings in the apparatus.

According to the present invention, the foregoing object is attained by providing a storage medium that stores a program for implementing a control method for an image reading apparatus which comprises an image sensing unit for reading an image, a communication unit for transferring an image signal read by the image sensing unit to an external apparatus, and a detector for detecting presence/absence of abnormality of the communication unit, comprising: computer readable program code means for, when the detector detects any abnormality of the communication unit, setting the image reading apparatus in a power saving mode.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the arrangement of an image reading apparatus according to a first embodiment of the present invention;
Fig. 2 is a block diagram showing the arrangement of principal part of the image reading apparatus of the first embodiment;
Fig. 3 is a sectional view showing the internal structure of the image reading apparatus of the first embodiment;
Fig. 4 is a block diagram showing the arrangement of principal part of an image reading apparatus according to a second embodiment of the present invention;
Fig. 5 is a block diagram showing the arrangement of principal part of an image reading apparatus according to a third embodiment of the present invention;
Fig. 6 is a flow chart showing an outline of a normal scan operation;
Fig. 7 is a flow chart showing a timer interrupt operation according to the third embodiment;
Fig. 8 is a block diagram showing an example of the arrangement of a conventional image reading apparatus;
Fig. 9 is a flow chart showing the operation of the image reading apparatus in the first embodiment of the present invention; and
Fig. 10 is a flow chart showing the operation of the image reading apparatus in the second embodiment of the present invention.

### DETAILED DESCRIPTION OF THE PREFERRED EMBODIMENTS

Preferred embodiments of the present invention will be described in detail in accordance with the accompanying drawings.

### [First Embodiment]

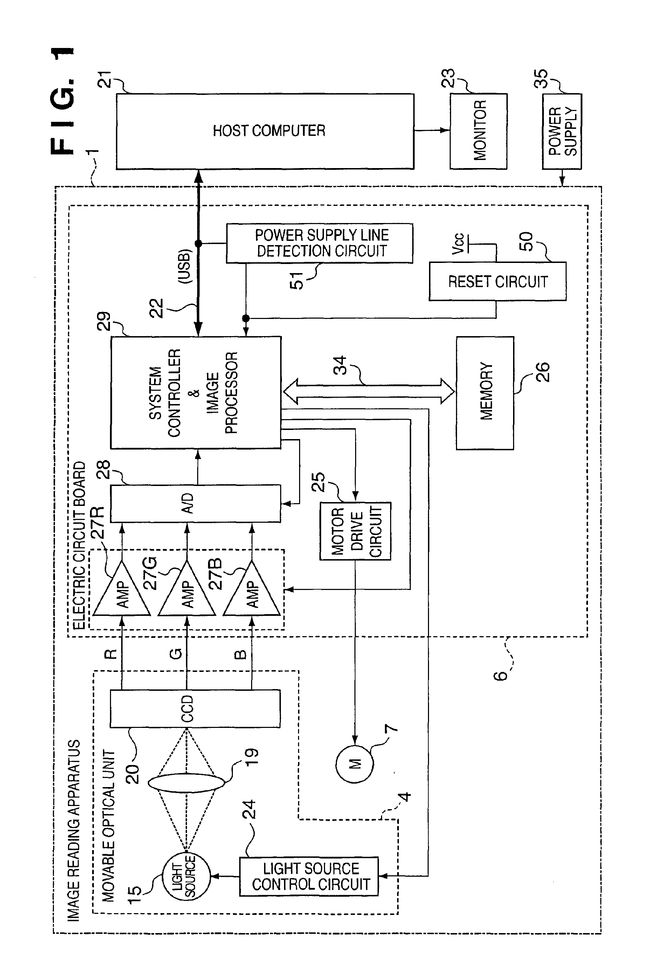

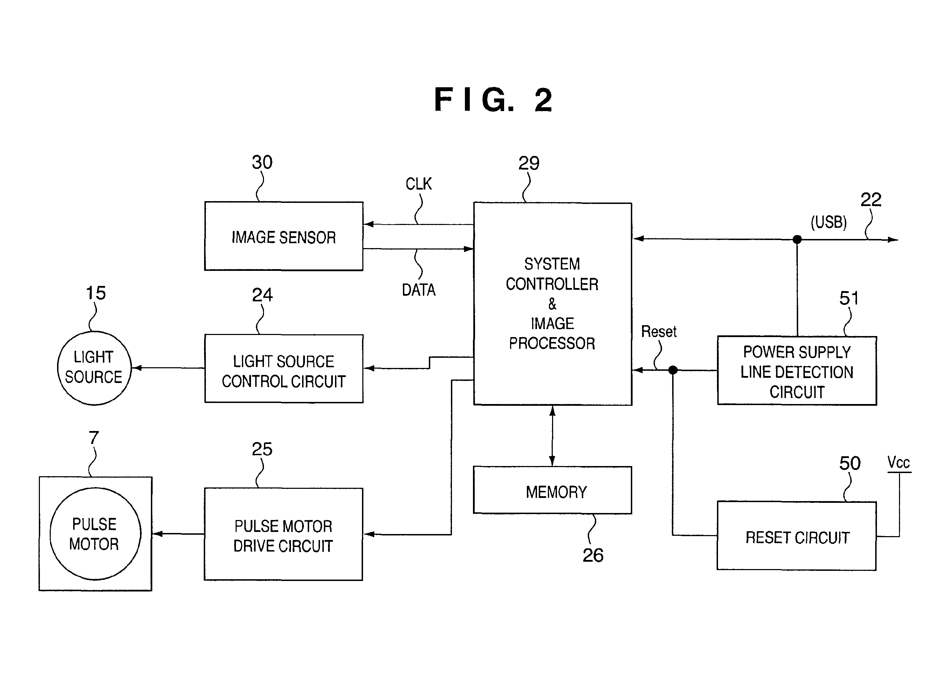

Fig. 1 is a block diagram showing the arrangement of an image reading apparatus according to the first embodiment of the present invention, and Fig. 2 is a block diagram showing the arrangement of principal part of the image reading apparatus of the first embodiment. The principal arrangement of the image reading apparatus of the first embodiment will be described below with reference to Figs. 1 and 2.

An image reading apparatus 1 comprises a movable optical unit 4 and electric circuit board 6. In the optical unit 4, reference numeral 24 denotes a light source control circuit for turning on a light source 15. The circuit 24 comprises a so-called inverter circuit when a cold cathode tube is used as the light source 15. Reference numeral 19 denotes an imaging lens which forms an image of light emitted by the light source 15 and reflected by a document on a CCD 20 as a photoelectric conversion element.

In the electric circuit board 6, reference numerals 27R, 27G, and 27B denote analog gain adjusters, which can amplify red (R), green (G), and blue (B) analog image signals output from the CCD 20 with variable gains. Reference numeral 28 denotes an A/D converter for converting the analog image signals output from the variable analog gain adjusters 27R, 27G, and 27B into digital image signals. The CCD 20, analog gain adjusters 27R, 27G, and 27B, and A/D converter 28 construct an image sensor 30 shown in Fig. 2.

Reference numeral 25 denotes a motor drive circuit for a pulse motor 7, which outputs an excitation switching signal for the pulse motor 7 in response to a signal from a system controller 29. Reference numeral 29 denotes a system controller & image processor which executes image processes such as offset correction, shading correction, gamma correction, digital gain adjustment, resolution conversion in the main scan and sub-scan directions, and the like for digital image signals. Also, the system controller & image processor 29 serves as a system controller that stores the operation sequence of the entire image reading apparatus 1, and executes various kinds of control in accordance with commands from a host computer 21.

Reference numeral 22 denotes a communication unit for communicating with the host computer 21. In this embodiment, the communication unit 22 is implemented by USB. Alternatively, other interfaces such as IEEE1394 and the like may be adopted.

Reference numeral 26 denotes a memory used as a working memory upon executing image processes. The memory 26 is used to store shading data for the shading process, gamma curve data for gamma correction, and the like, and is also used as a data buffer upon transferring image data to the host computer 21 via the communication unit 22. In this arrangement, the memory 26 uses a versatile RAM (random access memory).

Reference numeral 34 denotes a system bus for connecting the system controller 29 and memory 26. The system bus 34 includes address and data buses. Reference numeral 35 denotes a power supply which externally supplies electric power to the image reading apparatus 1.

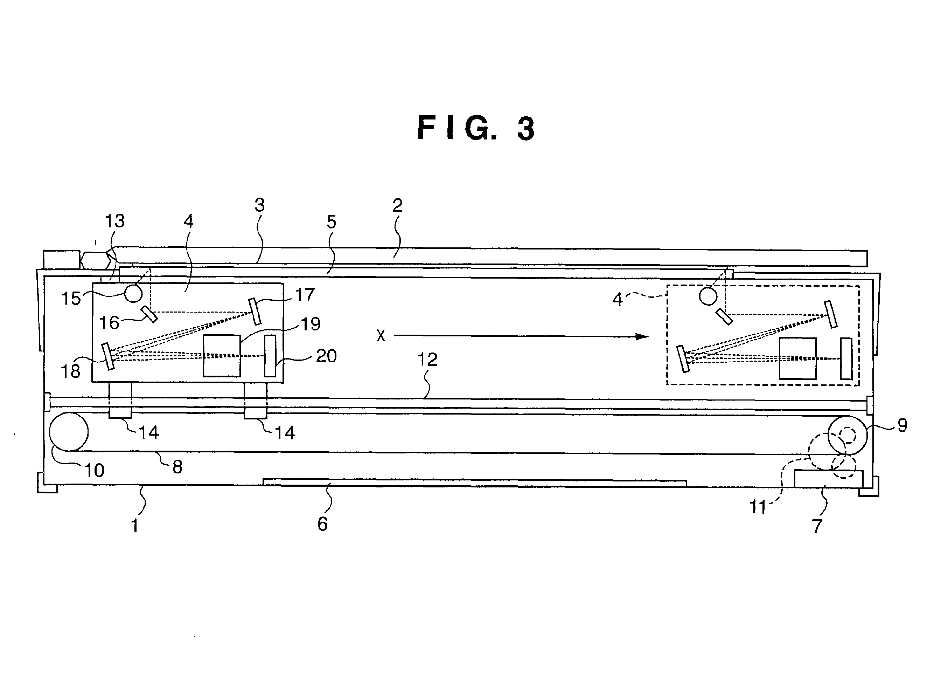

Fig. 3 is a sectional view showing the internal structure of the image reading apparatus of the first embodiment.

Referring to Fig. 3, reference numeral 2 denotes a document pressing cover of the main body of the image reading apparatus 1; and 3, a document to be read. Furthermore, the image reading apparatus 1 comprises the movable optical unit 4, a platen glass 5, the electric circuit board 6, the pulse motor 7, an endless belt 8, pulleys 9 and 10, a gear train 11, a guide rail 12, and a white reference plate 13.

The optical unit 4 and pulse motor 7 are electrically connected to each other via a cable (not shown). The optical unit 4 is slidably placed on the guide rail 12 via mount portions 14. The mount portions 14 are fixed to the endless belt 8. The optical unit 4 comprises the light source 15, a plurality of reflection mirrors 16, 17, and 18, the imaging lens 19, and the CCD 20.

A normal document image reading operation of the image reading apparatus 1 with the above arrangement will be briefly described below.

The image reading apparatus 1 starts a reading operation in response to a read command from the host computer 21. The image reading apparatus 1 turns on the light source 15 in the optical unit 4, makes the plurality of mirrors 16, 17, and 18 reflect light reflected by a document, and forms an image of the reflected light on the CCD 20 via the imaging lens 19, thus reading an image for one line in the main scan direction.

The drive force of the pulse motor 7 is transmitted to the pulley 9 via the gear train 11 to rotate the pulley 9, thereby driving the endless belt 8. In this way, the optical unit 4 fixed to the endless belt 8 via the mount portions 14 moves along the guide rail in the sub-scan direction indicated by arrow X. The image reading apparatus 1 repeats to read a line image in the main scan direction while moving the optical unit 4 in the sub-scan direction.

The image reading apparatus 1 moves the optical unit 4 in the sub-scan direction indicated by arrow X up to a position indicated by a dotted line 4 in Fig. 3, thus scanning the entire surface of the platen glass 5.

Note that a partial image of a document on the platen glass 5 can also be read in accordance with the contents of a read command from the host computer 21. In such case, the system controller & image processor 29 specifies the range of pixels to be adopted of the outputs from the image sensor 30 in the main scan direction, and the moving range of the optical unit 4 in the sub-scan direction, so as to attain the range of an image to be read designated by the host computer 21.

In the above arrangement, the first embodiment further comprises a reset circuit 50 for resetting the system controller 29 when the power supply 35 is turned on, and a power supply line detection circuit 51 as a characteristic feature of the first embodiment. Note that the power supply line detection circuit 51 detects a change in potential of a power supply line included in the USB cable 22. When a power supply voltage to be supplied from the host computer 21 stops upon unplugging the USB cable 21 from the image reading apparatus 1 and/or the host computer 21, the detection circuit 51 outputs a reset signal (Reset) to the system controller 29.

Upon receiving the reset signal, the system controller 29 is reset since it is set in the same state as that upon receiving a reset signal (Reset) from the reset circuit 50 upon power ON of the power supply 35. The system controller 29 controls the light source 15 via the light source control circuit 24, and the pulse motor 7 via the motor drive circuit 25. In this case, since the system controller 29 is reset, their control states are also reset. In the reset state, the light source 15 is turned off, and a current to the pulse motor 7 is stopped.

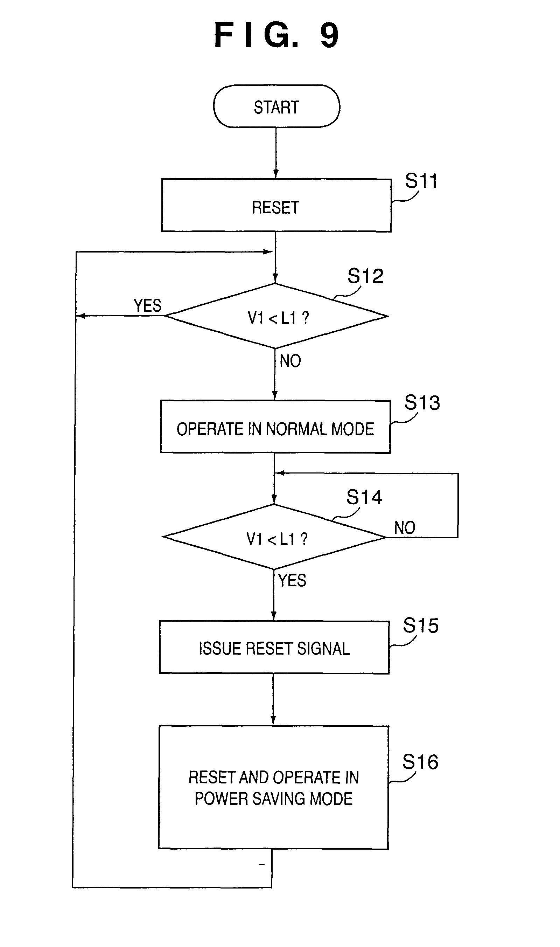

The operation of the first embodiment will be described below with reference to Fig. 9.

When the power supply 35 of the image reading apparatus 1 is turned on, the system controller 29 is reset in response to the reset signal output from the reset circuit 50 (step S11). The power supply line detection circuit 51 checks if a power supply potential V1 of the power supply line included in the USB cable 22 is lower than a predetermined level L1 (step S12). If YES in step S12, step S12 is repeated to monitor the power supply potential V1 while maintaining the reset state. If the power supply potential V1 is equal to or higher than the predetermined level L1, it is determined that the USB cable 22 used to communicate with the host computer 21 is normally connected, and operation is executed in a normal image reading mode (normal mode) (step S13).

The power supply line detection circuit 51 continuously monitors the power supply potential V1 of the power supply line included in the USB cable 22 (step S14). If the circuit 51 detects that the power supply potential V1 becomes lower than the predetermined level L1 (YES in step S14), it determines that a communication with the host computer 21 is abnormal or is disconnected, the circuit 51 issues a reset signal (Reset) to the system controller 29 (step S15).

Upon receiving the reset signal, the system controller 29 is reset (step S16). Since the system controller 29 is reset, control of the light source 15 via the light source control circuit 24, and that of the pulse motor 7 via the motor drive circuit 25 by the system controller 29 are also reset. In this reset state, since the light source 15 is turned off, and a current to be supplied to the pulse motor 7 is stopped, a power saving mode is set. That is, in the first embodiment, currents consumed by the light source 15 and pulse motor 7 assume minimum values.

Since the system controller 29 is reset, supply of clock signals used to operate the image sensor 30 incorporated in the apparatus, and access to the memory 26 also stop.

As described above, according to the first embodiment, in an image reading apparatus with a simple arrangement which incorporates neither a CPU nor a large-scale hardware timer, when the USB cable 22 as the communication unit with the host computer 21 is unplugged during operation in the normal mode, and the power supply line included in the USB cable 22 is disconnected, the system controller 29 is reset before the apparatus operation becomes unstable, and currents consumed by the light source 15 and pulse motor 7 instantaneously become minimum values. In addition, when the system controller 29 is reset, since supply of clock signals and access to the memory 26 stop, consumption power in the apparatus can be minimized.

In the above description, the light source 15 is turned off. Alternatively, to assure a shorter rise time after the communication has restarted, the energization amount may be lowered.

### [Second Embodiment]

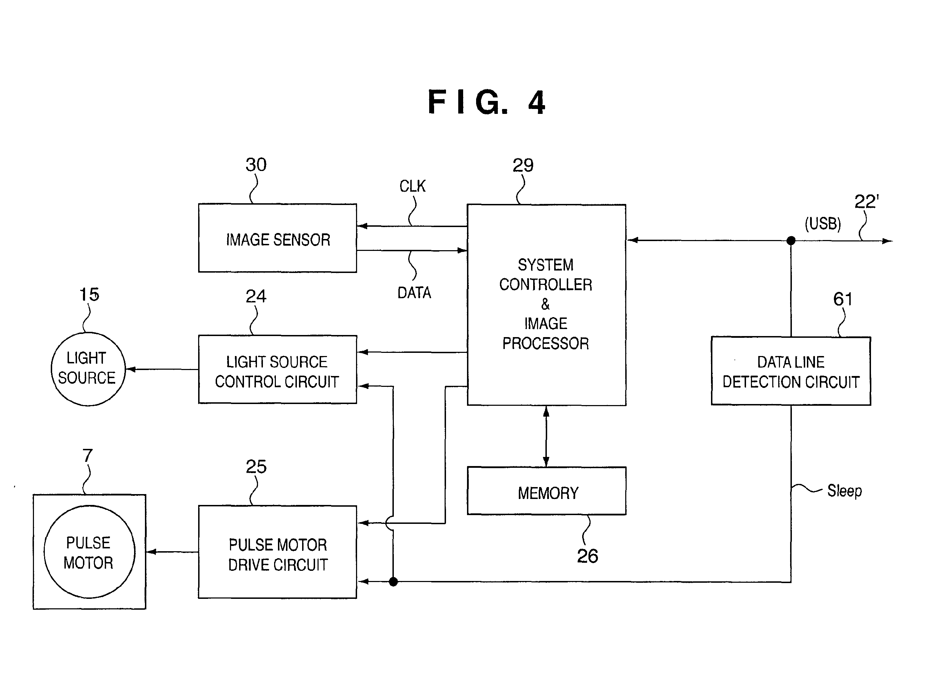

Fig. 4 is a block diagram showing the arrangement of principal part of an image reading apparatus according to the second embodiment of the present invention. The same reference numerals in Fig. 4 denote the same parts as in Fig. 2, and a description thereof will be omitted.

The arrangement of the second embodiment comprises a data line detection circuit 61 in place of the power supply line detection circuit 51 in the arrangement of the first embodiment shown in Figs. 1 and 2.

The data line detection circuit 61 detects a change in potential on a data line in the USB cable 22, and outputs a sleep signal (Sleep) to the light source control circuit 24 and pulse motor drive circuit 25 when the data line is disconnected upon unplugging the USB cable 22 or any abnormality is found.

The light source control circuit 24 and pulse motor drive circuit 25 respectively control the light source 15 and pulse motor 7 under the control of the system controller 29. The sleep signal issued by the data line detection circuit 61 has higher priority than control signals normally received from the system controller 29. In a sleep state in which the sleep signal is issued, the light source 15 is turned off, and currents to be supplied to the pulse motor 7 are stopped.

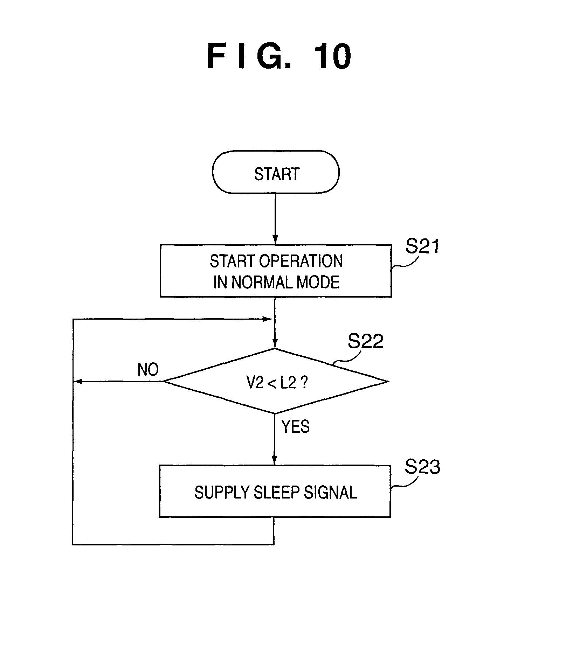

The operation of the second embodiment will be described below with reference to Fig. 10.

When the power supply 35 of the image reading apparatus 1 is turned on, the operation starts in the normal image reading mode (normal mode) in step S21. The data line detection circuit 61 checks if a potential V2 of the data line included in the USB cable 22 is lower than a predetermined level L2 (step S22). If the potential V2 of the data line is equal to or higher than the predetermined level L2, since it is determined that the USB cable 22 used to communicate with the host computer 21 is normally connected, the flow returns to step S22 to proceed with operation in the normal mode without issuing a sleep signal, thus monitoring the power supply and the potential V2 on the data line.

On the other hand, if the data line detection circuit 61 detects that the potential V2 of the data line included in the USB cable 22 becomes lower than the predetermined level L2 (YES in step S22), the data line detection circuit 61 determines that a communication with the host computer 21 is disconnected, and issues a sleep signal (Sleep) to the light source control circuit 24 and pulse motor drive circuit 25 (step S23).

Upon receiving the sleep signal, the light source control circuit 24 and pulse motor drive circuit 25 set their operations in a sleep state since the sleep signal has priority over normal control signals received from the system controller 29. In this sleep state, predetermined circuits are set in a power saving mode. That is, in the second embodiment, the light source 15 is turned off, and currents to be supplied to the pulse motor 7 are stopped.

As described above, in the second embodiment, in an image reading apparatus with a simple arrangement which incorporates neither a CPU nor a large-scale hardware timer, when the USB cable 22 as the communication means with the host computer 21 is unplugged from the image reading apparatus 1 and/or the host computer 21, and the data line included in the USB cable 22 is disconnected, since the light source control circuit 24 and pulse motor drive circuit 25 are set in a sleep state before the operation of the apparatus becomes unstable, currents consumed by the light source 15 and pulse motor 7 instantaneously become minimum values. That is, electric power supplied to the light source 15 and pulse motor 7 that may consume the largest electric power in the apparatus is minimized, thus nearly minimizing consumption power in the apparatus.

In the above description, the light source 15 is turned off. Alternatively, to assure a shorter rise time after the communication has restarted, the energization amount may be lowered.

### [Third Embodiment]

In the first and second embodiments, the image reading apparatus does not comprise any CPU. Alternatively, the present invention may be applied to an apparatus that comprises a CPU. In the third embodiment, an image reading apparatus that comprises a CPU in a system controller will be explained below.

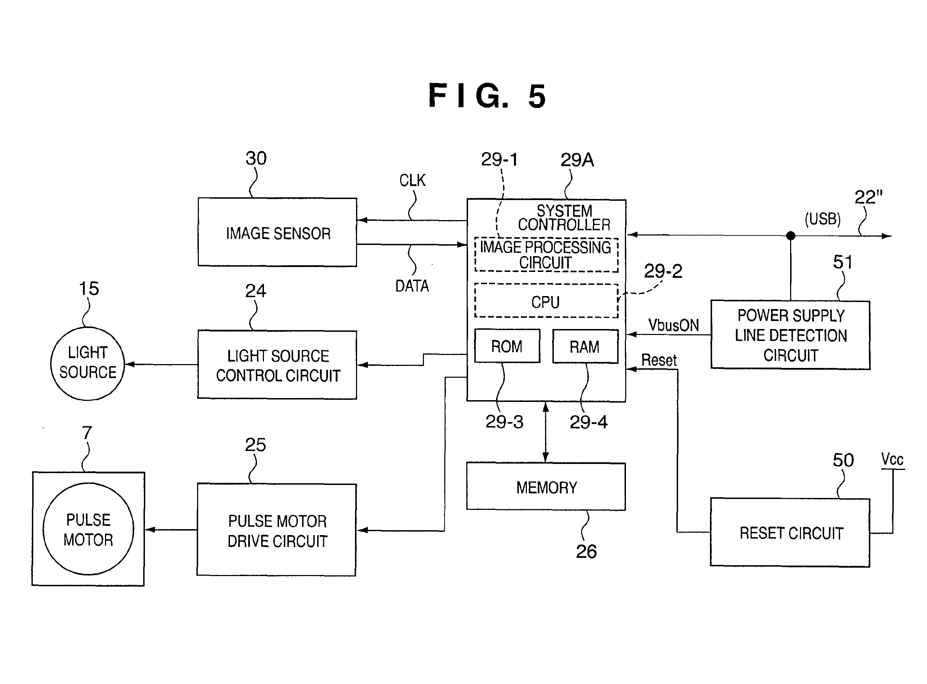

Fig. 5 is a block diagram showing the arrangement of principal part of an image reading apparatus according to the third embodiment of the present invention. The same reference numerals in Fig. 5 denote the same parts as in Fig. 2, and a description thereof will be omitted.

The arrangement of the third embodiment comprises a CPU and the like in a system controller in the arrangement of the first embodiment shown in Figs. 1 and 2. That is, a system controller 29A of the third embodiment comprises an image processing circuit 29-1, CPU 29-2, ROM 29-3, and RAM 29-4. Furthermore, the power supply line detection circuit 51 detects whether or not a power supply voltage of the USB cable 22 is normally supplied from the host computer 21, and outputs an ON detection signal VbusON to the system controller 29A if the power supply voltage is normally supplied. Note that the detection signal VbusON is output to the system controller 29A via a route different from that of a reset signal output from the reset circuit 50.

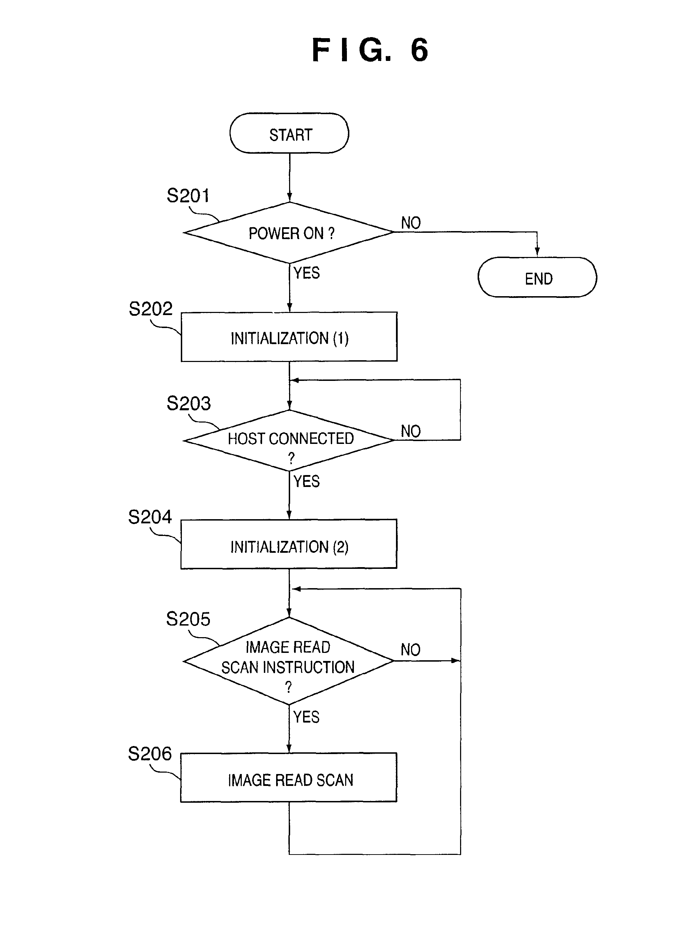

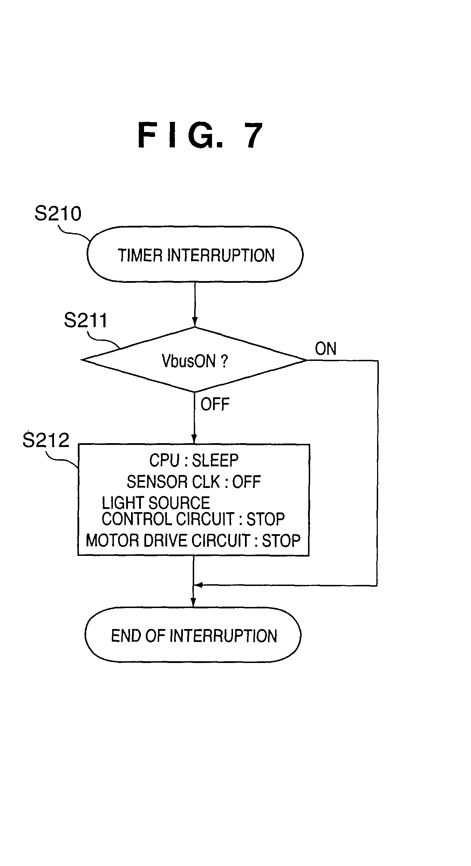

Fig. 6 is a flow chart showing an outline of the normal scan operation in the third embodiment, and Fig.7 is a flow chart showing the timer interrupt operation as a characteristic feature of the third embodiment.

Referring to Fig. 6, if the power supply 35 of the apparatus is turned on (step S201), the CPU 29-2 is reset in response to an output (Reset signal) from the reset circuit 50. Initial values are set in various flags and memory in the system controller 29A (step S202), and the control waits for an instruction from the host computer 21 (step S203). If the host computer 21 confirms connection with the image reading apparatus 1, it issues a reset instruction to the image reading apparatus 1. The image reading apparatus 1 adjusts the light source 15 to turn it on, and executes initialization such as setup of the home position of the pulse motor 7, acquisition of shading correction data, permission of timer interrupt, and the like in accordance the initialization instruction (step S204).

After that, the control waits for an image read scan instruction from the host computer 21 (step S205). Upon receiving the image read scan instruction, clock signals CLK are supplied to the image sensor 30, and the pulse motor 7 is driven to scan a document image, thereby reading an image within the read range designated by the host computer 21. The read image data is then output to the host computer 21 (step S206).

The timer interrupt operation as a characteristic feature of the third embodiment will be described below with reference to Fig. 7. Assume that an interrupt is set to be generated at 1-msec intervals in initialization. When a program according to the flow chart in Fig. 7 is stored in the ROM 29-3 in the system controller 29A to operate the apparatus, the following control method can be implemented.

Upon generation of a timer interrupt (step S210), it is checked if the input VbusON from the power supply line detection circuit 51 is ON (step S211). Since the power supply voltage of USB cannot be detected when the USB cable 22 is not connected to the host computer 21 or when any abnormality is detected upon inadvertently unplugging a connector to disrupt a communication in progress, the signal VbusON is OFF.

If the signal VbusON is OFF, the CPU is set in a sleep state even during an image reading process, and supply of clock signals CLK to the image sensor 30 is stopped. Also, an emission stop signal is supplied to the light source control circuit 24 to turn off the light source 15, and a stop signal is output to the pulse motor drive circuit 25 to stop the pulse motor 7 even during driving (step S212).

In the third embodiment, the power saving mode is set for some respective circuits, e.g., a clock IC, the light source lamp, motor, and the like, but some circuits need not always be completely turned off and their consumption power need only be reduced in the power saving mode (the same applies to other embodiments).

If it is detected that the signal VbusON is ON, the interrupt process normally ends (step S213).

As described above, according to the third embodiment, in an image reading apparatus which comprises a CPU, since disconnection of a communication can be detected without monitoring the communication by the CPU, the program size can be reduced, and power savings in the image reading apparatus can be achieved.

If it is detected that the signal VbusON is OFF, the pulse motor 7 is controlled to be merely immediately stopped. Alternatively, in the third embodiment that comprises the CPU 29-2, the pulse motor 7 may be stopped after it is controlled to be returned to its home position, i.e., to reset its mechanical position.

The present invention is not limited to the apparatuses of the aforementioned embodiments, and includes not only an apparatus which executes initialization immediately after any abnormality of a communication path is detected, but also an apparatus which executes initialization after it normally recovers the communication path.

Further, the object of the present invention can also be achieved by providing a storage medium storing program codes for performing the aforesaid processes to a computer system or apparatus (e.g., a personal computer), reading the program codes, by a CPU or MPU of the computer system or apparatus, from the storage medium, then executing the program.

In this case, the program codes read from the storage medium realize the functions according to the third embodiment, and the storage medium storing the program codes constitutes the invention.

Further, the storage medium, such as a floppy disk, a hard disk, an optical disk, a magneto-optical disk, CD-ROM, CD-R, a magnetic tape, a non-volatile type memory card, and ROM can be used for providing the program codes.

Furthermore, besides aforesaid functions according to the above third embodiment are realized by executing the program codes which are read by a computer, the present invention includes a case where an OS (operating system) or the like working on the computer performs a part or entire processes in accordance with designations of the program codes and realizes functions according to the above third embodiment.

Furthermore, the present invention also includes a case where, after the program codes read from the storage medium are written in a function expansion card which is inserted into the computer or in a memory provided in a function expansion unit which is connected to the computer, CPU or the like contained in the function expansion card or unit performs a part or entire process in accordance with designations of the program codes and realizes functions of the above embodiments.

In a case where the present invention is applied to the aforesaid storage medium, the storage medium stores program codes corresponding to the flowchart in Fig. 7 described in the third embodiment.

The present invention is not limited to the above embodiments and various changes and modifications can be made within the spirit and scope of the present invention. Therefore to apprise the public of the scope of the present invention, the following claims are made.

In an image reading apparatus which has an image sensing unit for reading an image, and a communication unit for transferring an image signal read by the image sensing unit to an external apparatus, a detector detects the presence/absence of abnormality of the communication unit, and when the detector detects any abnormality of the communication unit, the image reading apparatus is set in a power saving mode.

## Claims

1. An image reading apparatus which comprises an image sensing unit for reading an image, and a communication unit for transferring an image signal read by the image sensing unit to an external apparatus, comprising:
a detector for detecting presence/absence of abnormality of the communication unit; and
a controller for, when said detector detects any abnormality of the communication unit, setting said image reading apparatus in a power saving mode.

2. The apparatus according to claim 1, wherein at least one of an internal circuit and mechanical position of the image sensing unit is initialized in the power saving mode.

3. The apparatus according to claim 1, wherein at least one of an internal circuit and function of the image sensing unit is set in a sleep state in the power saving mode.

4. The apparatus according to claim 1, wherein the image sensing unit comprises:
a light source for irradiating a document with light;
an image sensor for converting light reflected by a document irradiated with light from said light source into an electrical image signal;
a moving unit for moving a relative position between an image of the document and said image sensor; and
a setting unit for setting at least one of said light source and said moving unit in the power saving mode in accordance with a setup of said controller.

5. The apparatus according to claim 1, further comprising an A/D converter for converting the image signal output from the image sensing unit into a digital signal,
wherein the communication unit transfers the digital image signal converted by said A/D converter to the external apparatus.

6. The apparatus according to claim 1, wherein said detector detects any abnormality of the communication unit by detecting a change in potential of a power supply line included in the communication unit.

7. The apparatus according to claim 1, wherein said detector detects any abnormality of the communication unit by detecting a change in potential of a data line included in the communication unit.

8. The apparatus according to claim 1, wherein the communication unit has a function of allowing to plug/unplug a cable without turning off a power supply of the external apparatus.

9. The apparatus according to claim 8, wherein the function of the communication unit complies with USB or IEEE1394.

10. A control method for an image reading apparatus which comprises an image sensing unit for reading an image, and a communication unit for transferring an image signal read by the image sensing unit to an external apparatus, comprising:
a detection step of detecting presence/absence of abnormality of the communication unit; and
a control step of setting, when any abnormality of the communication unit is detected in the detection step, the image reading apparatus in a power saving mode.

11. The method according to claim 10, wherein at least one of an internal circuit and mechanical position of the image sensing unit is initialized in the power saving mode.

12. The method according to claim 10, wherein at least one of an internal circuit and function of the image sensing unit is set in a sleep state in the power saving mode.

13. The method according to claim 10, further comprising:
an A/D conversion step of converting the image signal output from the image sensing unit into a digital signal; and
a transfer step of transferring the digital image signal converted in the A/D conversion step from the communication unit to the external apparatus.

14. The method according to claim 10, wherein the detection step includes a step of detecting any abnormality of the communication unit by detecting a change in potential of a power supply line included in the communication unit.

15. The method according to claim 10, wherein the detection step includes a step of detecting any abnormality of the communication unit by detecting a change in potential of a data line included in the communication unit.

16. The method according to claim 10, wherein the communication unit has a function of allowing to plug/unplug a cable without turning off a power supply of the external apparatus.

17. The method according to claim 16, wherein the function of the communication unit complies with USB or IEEE1394.

18. An image processing system which comprises an image reading apparatus for outputting an image signal read by an image sensing unit to a communication unit, and a host apparatus for processing the image signal sent from the image reading apparatus via the communication unit,
the image reading apparatus comprising:
a detector for detecting presence/absence of abnormality of the communication unit; and
a controller for, when said detector detects any abnormality of the communication unit, setting the image reading apparatus in a power saving mode.

19. The system according to claim 18, wherein at least one of an internal circuit and mechanical position of the image sensing unit is initialized in the power saving mode.

20. The system according to claim 18, wherein at least one of an internal circuit and function of the image sensing unit is set in a sleep state in the power saving mode.

21. The system according to claim 18, further comprising an A/D converter for converting the image signal output from the image sensing unit into a digital signal,
wherein the communication unit transfers the digital image signal converted by said A/D converter to the host apparatus.

22. The system according to claim 18, wherein said detector detects any abnormality of the communication unit by detecting a change in potential of a power supply line included in the communication unit.

23. The system according to claim 18, wherein said detector detects any abnormality of the communication unit by detecting a change in potential of a data line included in the communication unit.

24. The system according to claim 18, wherein the communication unit has a function of allowing to plug/unplug a cable without turning off a power supply of the host apparatus.

25. The system according to claim 24, wherein the function of the communication unit complies with USB or IEEE1394.

26. A storage medium that stores a program for implementing a control method for an image reading apparatus which comprises an image sensing unit for reading an image, a communication unit for transferring an image signal read by the image sensing unit to an external apparatus, and a detector for detecting presence/absence of abnormality of the communication unit, comprising:
computer readable program code means for, when the detector detects any abnormality of the communication unit, setting the image reading apparatus in a power saving mode.

27. The medium according to claim 26, wherein the communication unit has a function of allowing to plug/unplug a cable without turning off a power supply of the external apparatus.

28. The medium according to claim 27, wherein the function of the communication unit complies with USB or IEEE1394.
